# EUROPEAN PATENT APPLICATION

(11) **EP 3 461 096 A1**
(43) Date of publication of application: **27.03.2019**
(21) Application number: 17798553.8
(22) Date of filing: 31.03.2017
(51) Int. Cl.: H04L 29/06, H04L 29/08

(54) **SIGNALLING ARCHITECTURE AND METHOD AND APPARATUS THEREOF FOR IMPLEMENTING CALL PROCESSING**

(30) Priority: 16.05.2016 CN 201610324117
(71) Applicant: ZTE Corporation, Shenzhen, Guangdong 518057 (CN)
(72) Inventor: GAO, Yang, Shenzhen Guangdong 518057 (CN)
(74) Representative: Petit, Maxime
(86) International application number: PCT/CN2017/079107
(87) International publication number: WO 2017/197989

(57) **Abstract**

Disclosed in the present application is a signalling architecture and a method and apparatus thereof for implementing call processing, the architecture at least including: a signalling system for implementing signalling functions such as registration, routing, and calling; a Web server for providing user call-related services pages and corresponding scripts; and a user equipment for implementing Web-based communication by using the signalling system and the Web server. A thorough integration of the signalling system and page technology is implemented by means of the technical solution provided in the present invention.

## Description

### TECHNICAL FIELD

The embodiments of the present invention relate to, but not limited to, the internet technology, in particular, to a signalling architecture, and a method and apparatus for implementing a call processing in the signalling architecture.

### BACKGROUND

Complete integration of telecommunication system and Internet (Web) is an ICT dream. Efforts to realize this dream has been made many times in both the telecommunication industry and the Internet industry.

The idea of the integration technologies in the telecommunications industry has aways focused on capability open; for example, the Open Mobile Architecture (OMA) standard organization has proposes Parlay X Wed Service based on the IP Multimedia Subsystem (IMS). Such an idea is still essentially a continuation of the idea relating to the intelligent network (IN) in the era of non-intelligent terminals. Except for some services such as click-to-dial, it is still difficult to integrate into the Internet. With the popularity of smartphones, various Web-based applications of social applications of OTT ("Over The Top", referring to provide various application services to users through the Internet) have emerged, such as group chat which shares various video clips, news, video, etc.; while the capability of the telecommunication industry is dwarfed. Even though OMA has redefined the above-mentioned capability open interfaces in accordance with the Restful mode which is the most popular mode in the Internet, the idea of capability open still seems difficult to integrate into the mobile Internet era.

The idea of the integration technologies in the Internet industry focuses on page technology (HTML). In the HTML4 era, HTML tags provide a full support to multimedia (especially streaming media, such as video or the like). Controls (or plug-ins) are the most popular practices, for example, the popular plug-in technology such as Flash, Silverlight, etc. At the same time, there are a variety of plug-ins that can be used to make audio and video calls. This implementation has inherent advantages in interface presentation, but it cannot be completely integrated with the telecommunication system since it lacks signalling support. Even in the HTML5 era, this problem has still existed. HTML5 directly defines page tags for audio (<audio>) and video (<video>), and the WebRTC standard of the IETF and the W3C standards organisations requires browsers to support basic audio and video codecs. However, this just omits the multimedia plug-ins of the HTML4 era.

In addition, although the current popular OTT social softwares, including WhatsApp, WeChat or the like, are based on the Web, none of them has a strong signalling system as a support. For example, WeChat application is implemented based on the mail synchronization protocol, and lacks call control state and multimedia description (SDP) of the signalling system. Therefore, the call state and the complex multimedia combination are still short boards.

To sum up, the capability of the telecommunication industry cannot find a suitable way to open up, so it is impossible to further integrate it with the Internet; on the other hand, the Internet is based on page technology, but lacks a strong signalling support, so it is impossible to establish large-scale multimedia applications; moreover, there are also some related problems in OTT owing to its technical architecture.

### SUMMARY

Hereinafter, an overview of the subject matter herein is described in detail. This summary is not intended to limit the scope of the claims.

Embodiments of the present invention provide a signalling architecture, and a method and apparatus for implementing a call processing in the signalling architecture, which can achieve the complete integration of the signalling system and the page technology.

In order to achieve the target of the present invention, an embodiment of the present invention provides a signalling architecture which includes a signalling system, an Internet Web server, and a user equipment, abbreviated as UE; wherein, the signalling system is configured to implement signalling functions; the Web server is configured to provide a page for user calling-related services and a corresponding script; and the UE is configured to implement a Web-based communication by using the signalling system and the Web server.

Optionally, the signalling architecture further includes a remote device by which the UE establishes a call.

Optionally, the signalling architecture further includes an external device having a media capability configured to be paired with the UE or the remote device.

Optionally, the signalling system includes an IP multimedia system, abbreviated as IMS; or, the signalling system includes a multi-device application server, abbreviated as AS, and a call session control function, abbreviated as CSCF.

Optionally, the remote device is a user equipment or a conference server.

The present invention further provides an apparatus for implementing a call processing in a signalling architecture which includes: a second registration processing module configured to perform a registration and an authentication of a UE according to a registration request from the UE; and a second call processing module configured to establish, according to a call request of a UE which is registered and authenticated successfully, media streams between the UE initiating the call request and a called UE.

Optionally, the apparatus further includes a second stream transfer processing module configured to: record multi-device and media stream information of a user according to a registration and a call of a third party; receive an instruction of partial-stream transfer from a Web server in the signalling architecture and initiate a corresponding stream transfer operation; and return a stream transfer completing indication to the Web server in the signalling architecture after completing the stream transfer.

Optionally, the second call processing module is further configured to: receive a request for calling the UE from a third UE and forward the request to the UE, receive an acknowledge from the UE, and establish media streams between the third UE and the UE called by the third UE.

Optionally, the second call processing module is further configured to end, according to a hang-up request from the UE, a session between the UE initiating the hang-up request and the called UE.

Optionally, the apparatus is disposed in a signalling system of the signalling architecture.

The present invention further provides an apparatus for implementing a call in a signalling architecture including a second page processing module, wherein, the second page processing module is configured to provide a corresponding page and script to a UE according to an acquirement request from the UE.

Optionally, the apparatus further includes a third stream transfer processing module configured to: send, according to a Post request carrying a partial-stream transfer from the UE, an instruction of partial-stream transfer to a signalling system in the signalling architecture; and receive a stream transfer completing indication from the signalling system in the signalling architecture.

Optionally, the second page processing module is further configured to provide, in a case that a UE called by the UE is a Web-based UE, the corresponding page and script to the called UE according to an acquirement request form the called UE.

Optionally, the second page processing module is further configured to provide the corresponding page and script to the UE, after receiving a Post request from the UE.

Optionally, the apparatus is disposed in a Web server of the signalling architecture.

An embodiment of the present invention further provides an apparatus for implementing a call in a signalling architecture which includes a first registration processing module, a first page processing module, and a first call processing module, wherein, the first registration processing module is configured to perform a registration and an authentication by a signalling system; the first page processing module is configured to acquire, by a Web server, a page and a script which need to request; and the first call processing module is configured to acquire, after the registration and the authentication are successful, call information by the acquired script according to an operation on the page, and control calling out by the signalling system to establish media streams with a called UE.

Optionally, the apparatus further includes a first stream transfer processing module configured to: initiate, according to a setting of partial-stream transfer from a user, a Post request to the Web server in the signalling architecture; and perform a corresponding stream transfer operation by the signalling system in the signalling architecture so as to transfer a part of streams to a corresponding UE; correspondingly, the first call processing module is further configured to: trigger, by the script, a pairing connection between a UE where the first call processing module is located and an external device and interact with the external device to acquire a SDP, when receiving from a user a click on a link for a video call of the external device; and establish media streams between the external device and the called UE by the signalling system and the Web server.

Optionally, the apparatus further includes a first stream transfer processing module configured to: trigger, by the script, connections to multiple cameras and correspondences with control streams and interact with external devices to acquire a SDP, when receiving from a user a click on a link for a holographic call; or, trigger, by the script, connections to the external devices and correspondences with control streams and interact with the external devices to acquire the SDP, when receiving the page and the script requested from the Web server; and multiple video streams for describing images of the UE where the first stream transfer processing module is located are delivered to an external device of a peer UE, and holographic images from the UE where the first stream transfer processing module is located are presented by the external device of the peer UE according to the multiple video streams; or, multiple video streams for describing images of the peer UE are delivered to an external device of the UE where the first stream transfer processing module is located, and holographic images of the peer UE are presented by the UE where the first stream transfer processing module is located according to the multiple video streams.

Optionally, the first registration processing module registers and authenticates to the signalling system by using a signalling system identification, abbreviated as ID; and the first page processing module logs into the Web server by using the signalling system ID, and uses authentication parameters of the signalling system.

Optionally, the first registration processing module registers and authenticates to the signalling system by using a signalling system ID; and the first page processing module is further configured to set an association relationship between the signalling system ID and a Web server ID, and a script control; and the first page processing module logs into the Web server by using the Web server ID.

Optionally, the first call processing module is further configured to: receive information input by a user, and send a Post request to the Web server to deliver the information input by the user to the Web server.

Optionally, the first call processing module is further configured to: end a session with the called UE by the signalling system.

Optionally, the first call processing module is further configured to: receive a call request from a third UE from the signalling system; control to present two videos on the page and return an acknowledge to the signalling system; and establish media streams with the third UE.

Optionally, in the first registration processing module, one SIP_UA of the UE where the first registration processing module is located initiates a registration request.

Optionally, the one SIP_UA contains one or more pages, each page includes one or more calls.

Optionally, the first page processing module is further configured to acquire, according to a HTTP URI carried in a UI URI header from the signalling system, a URI of the page which needs to be requested.

Optionally, the UI URI header of the signalling system is carried in an INVITE sent by the signalling system to the UE where the signalling system is located; or carried in an INVITE sent to the signalling system from a UE initiating a call.

Optionally, the first page processing module is further configured to initiate, to the signalling system, a registration request carrying a capability signature indicating to support the UI URI header.

Optionally, the apparatus is disposed in a user equipment of the signalling architecture.

An embodiment of the present invention further provides a method for implementing a call processing in a signalling architecture which includes: performing, by a signalling system in the signalling architecture, a registration and an authentication of a UE according to a registration request from the UE; and establishing, according to a call request from a UE, media streams between the UE initiating the call request and a called UE.

Optionally, the method further includes: recording, by the signalling system, multi-device and media stream information of a user according to a registration and a call of a third party; receiving an instruction of partial-stream transfer from a Web server in the signalling architecture and initiating a corresponding stream transfer operation; and returning a stream transfer completing indication to the Web server in the signalling architecture after completing the stream transfer.

Optionally, when the signalling system receives a request for calling the UE from a third UE, the method further includes: forwarding, by the signalling system, the received request to the UE; receiving an acknowledge from the UE; and establishing media streams between the third UE and the UE called by the third UE.

Optionally, when the signalling system receives a hang-up request from the UE, the method further includes: ending, according to the hang-up request from the UE, a session between the UE initiating the hang-up request and the called UE.

An embodiment of the present invention further provides a method for implementing a call in a signalling architecture which includes: providing, by a Web server in the signalling architecture, a corresponding page and script to a UE according to an acquirement request from the UE.

Optionally, the method further includes: sending, by the Web server, an instruction of partial-stream transfer to a signalling system in the signalling architecture according to a Post request carrying a partial-stream transfer from the UE; and receiving a stream transfer completing indication from the signalling system in the signalling architecture.

Optionally, in a case that a UE called by the UE is a Web-based UE, the method further includes: providing, by the Web server, the corresponding page and script to the called UE according to an acquirement request form the called UE.

Optionally, the step of providing the corresponding page and script to the UE is carried out after the Web server receives a Post request from the UE.

An embodiment of the present invention further provides a method for implementing a call in a signalling architecture which includes: performing, by a UE, a registration and an authentication by a signalling system; acquiring, by the UE, a page and a script which need to be requested by a Web server; and after the registration and the authentication of the UE are successful, acquiring, by the script acquired by the UE, call information according an operation on the page, and controlling, by the signalling system, calling out to establish media streams with a called UE.

Optionally, the method further includes: initiating, by the UE, a Post request to the Web server in the signalling architecture according to a setting of partial-stream transfer from a user; performing, by the signalling system in the signalling architecture, a corresponding stream transfer operation to transfer a part of streams to a corresponding UE; when the UE receives from a user a click on a link for a video call of an external device, triggering, by the script, a pairing connection between the UE and the external device, and interacting with the external device to acquire a SDP; and establishing, by the signalling system and the Web server, media streams between the external device and the called UE.

Optionally, when the UE receives from a user a click on a link for a holographic call, the method further includes: triggering, by the script, connections to multiple cameras and correspondences with control streams, and interacting with an external device to acquire a SDP; or, when receiving the page and the script requested from the Web server, triggering, by the script, connections to external devices and correspondences with control streams, and interacting with the external devices to acquire the SDP; and delivering multiple video streams for describing images of the UE to an external device of a peer UE, and presenting holographic images from the UE by the external device of the peer UE according to the multiple video streams; or, delivering multiple video streams for describing images of the peer UE to an external device of the UE, and presenting holographic images of the peer UE by the UE according to the multiple video streams.

Optionally, the UE registers and authenticates to the signalling system by using a signalling system ID; and the UE logs into the Web server by using the signalling system ID, and uses authentication parameters of the signalling system.

Optionally, the UE sets an association relationship between the signalling system ID and a Web server ID, and a script control; the UE registers and authenticates to the signalling system by using the signalling system ID; and the UE logs into the Web server by using the Web server ID.

Optionally, when the UE accepts information input by a user, a Post request is sent to the Web server to deliver the information input by the user to the Web server.

Optionally, the UE ends a session with the called UE by the signalling system.

Optionally, when the UE receives a call request from a third UE from the signalling system, the method further includes: controlling, by the UE, to present two videos on the page and returning an acknowledge to the signalling system; and establishing media streams with the third UE.

Optionally, one SIP_UA of the UE initiates a registration request.

Optionally, the one SIP_UA contains one or more pages, each page includes one or more calls.

Optionally, the UE acquires a URI of the page which needs to be requested according to a HTTP URI carried in a UI URI header from the signalling system.

Optionally, the UI URI header of the signalling system is carried in an INVITE sent by the signalling system to the UE where the signalling system is located; or carried in an INVITE sent to the signalling system from a UE initiating a call.

Optionally, when the UE initiates a registration request to the signalling system, the registration request carries a capability signature indicating to support the UI URI header.

An embodiment of the present invention further provides a computer-readable storage medium storing computer-executable instructions for performing any one of the above methods.

The architecture of the present application includes at least a signalling system for implementing signalling functions such as registration, routing, calling, etc.; a Web server for providing a page for user calling-related services and a corresponding script; and a user equipment for implementing the Web-based communication using the signalling system and the Web server. With the technical solutions provided by the embodiments of the present invention, the complete integration of the signalling system and the page technology is achieved.

Other features and advantages of the invention will be set forth in the following descriptions, and will become apparent partially from the descriptions or will be understood by practicing the present invention. The targets and other advantages of the invention will be realized and attained by the structures as particularly specified in the descriptions, the appended claims and the drawings.

Other aspects will be apparent upon reading and understanding the drawings and the detailed descriptions.

### BRIEF DESCRIPTION OF THE FIGURES

The drawings described herein which constitute a part of the present application are provided for further understanding the present invention. The exemplary embodiments of the present invention and the descriptions thereof are intended to explain the present invention and should not be considered as a limitation of the present invention. In the drawings:
FIG. 1 is a schematic structural diagram of a signalling architecture in an embodiment of the present invention;
FIG. 2 is a schematic structural diagram of an apparatus for implementing a call in a signalling architecture in an embodiment of the present invention;
FIG. 3 is a schematic structural diagram of another apparatus for implementing a call in a signalling architecture in an embodiment of the present invention;
FIG. 4 is a schematic structural diagram of still another apparatus for implementing a call in a signalling architecture in an embodiment of the present invention;
FIG. 5 is a schematic flowchart of a first embodiment that a signalling architecture implements a call in an embodiment of the present invention;
FIG. 6 is a schematic flowchart of a second embodiment that a signalling architecture implements a call in an embodiment of the present invention;
FIG. 7 is a schematic flowchart of a first embodiment of implementing a registration of a user equipment based on a signalling architecture in an embodiment of the present invention;
FIG. 8 is a schematic flowchart of a second embodiment of implementing a registration of a user equipment based on a signalling architecture in an embodiment of the present invention;
FIG. 9 is a schematic flowchart of a third embodiment of implementing a registration of a user equipment based on a signalling architecture in an embodiment of the present invention;
FIG. 10 is a schematic flowchart of a fourth embodiment of implementing a registration of a user equipment based on a signalling architecture in an embodiment of the present invention;
FIG. 11 is a schematic flowchart of a first embodiment of changing a page based on a signalling architecture in an embodiment of the present invention;
FIG. 12 is a schematic flowchart of a second embodiment of changing a page based on a signalling architecture in an embodiment of the present invention;
FIG. 13 is a flowchart of an embodiment of implementing single-page multiple calls based on a signalling architecture in an embodiment of the present invention;
FIG. 14 is a flowchart of a first embodiment of establishing a correspondence between SIP_UA and pages in an embodiment of the present invention;
FIG. 15 is a flowchart of a second embodiment of establishing a correspondence between SIP_UA and pages in an embodiment of the present invention;
FIG. 16 is a schematic flowchart of a first embodiment of indicating a page in an embodiment of the present invention;
FIG. 17 is a schematic flowchart of a second embodiment of indicating a page in an embodiment of the present invention;
FIG. 18 is a schematic flowchart of a third embodiment of indicating a page in an embodiment of the present invention;
FIG. 19 is a schematic structural diagram of an embodiment of an application scenario of a signalling architecture in an embodiment of the present invention;
FIG. 20 is a schematic structural diagram of another embodiment of an application scenario of a signalling architecture in an embodiment of the present invention;
FIG. 21 is a schematic flowchart of an embodiment of implementing multi-device partial-stream transfer in an embodiment of the present invention;
FIG. 22 is a schematic diagram of a scenario of an embodiment of a signalling architecture combined with a VR application in an embodiment of the present invention;
FIG. 23 is a schematic diagram of a scenario of an embodiment of a signalling architecture combined with an AR application in an embodiment of the present invention;
FIG. 24 is a schematic flowchart of a first embodiment of a signalling architecture combined with an AR call in an embodiment of the present invention; and
FIG. 25 is a schematic flowchart of a second embodiment of a signalling architecture combined with an AR call in an embodiment of the present invention.

### DETAILED DESCRIPTION

The present invention will be described in detail bellow in conjunction with the embodiments and with reference to the drawings. It should be appreciated that the embodiments and the features in the embodiments of the present application may be combined as long as they do not conflict with each other.

In order to make the objects, the technical solutions and the advantages of the present invention more clearly, the embodiments of the present invention will be described in detail below with reference to the accompanying drawings. It should be noted that the embodiments and the features in the embodiments of the present application may be combined as long as they do not conflict with each other.

The inventor of the present application believes that, from the perspective of technical hierarchy, a signalling system should act as a good supporting platform under various multimedia communication applications. A good signalling system, whether it is provided by an operator in the future or provided by some basic Internet companies, needs to open the signalling capability for use by various internal and external multimedia communication applications.

In terms of both the development cost and the service experience, future multimedia communication applications have to be based on the Web server page technology. Therefore, there is a need for an architecture that completely integrates the signalling system with the Web server. It also needs to address key technologies such as control flows, ID relationships, and relationships between pages and call objects.

In addition, the new architecture needs to support new technologies such as multiple devices, a video relay, and external devices.

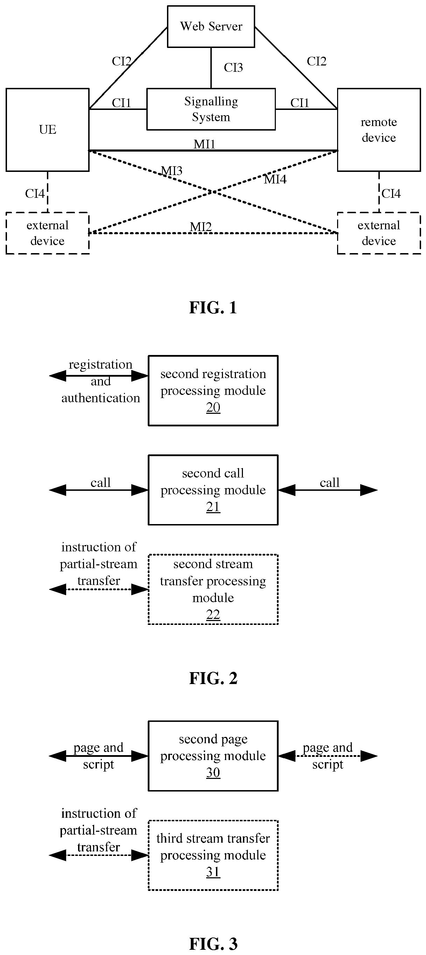

FIG. 1 is a schematic structural diagram of a signalling architecture in an embodiment of the present invention. As shown in FIG. 1, the signalling architecture includes a signalling system, a Web server, and a UE.

The signalling system is configured to implement signalling functions such as registration, routing, and calling, wherein the signalling system may be, for example, an IMS or the like.

The Web server is configured to provide a page for user calling-related services and a corresponding script; wherein the page may be a HTMI5 page or the like, for example; the script may be a JavaScript-type script (hereinafter referred to as a JS script) or the like, for example.

The UE is configured to implement Web-based communication by using the signalling system and the Web server. The UE may be a smartphone or the like. Hereinafter, UE_A represents the UE of the calling party; and UE_B represents the UE of the called party.

Moreover, the signalling architecture of the present invention further includes a remote device by which the user (UE_A) establishes a call. The remote device may be the UE_B or a conference server or the like, for example. For example, the conference server includes an AS, a media device, or the like.

Moreover, the signalling architecture of the present invention further includes external devices having a media capability, which is configured to be paired with the UE or the remote device.

As shown in FIG. 1, the interface between the UE or the remote device and the signalling system is a control interface 1 (CI1), and the interface contents are control signalling, such as the registration information, the call information, the subscription information for the user, etc. A typical control interface protocol is SIP, XMPP, HTTP+JSON, or the like.

The interface between the UE or the remote device and the Web server is a control interface 2 (CI2), and the interface contents are HTTP requests and responses, such as a user request for acquiring a calling-related page, a script, and so on. A typical control interface protocol is, for example, HTTP+HTML5 or the like.

The interface between the Web server and the signalling system is a control interface 3 (CI3), and the interface contents include: the Web server makes a request to the signalling system to acquire a certain type of information to construct page contents; or the Web server sends a certain type of request to the signalling system to implement a signalling operation, and the like.

The control interface between the UE or the remote device and an external device for connecting and pairing, and exchanging SDP is a control interface 4 (CI4); wherein the SDP includes video media descriptions and media descriptions of an optional control channel.

The media interface between the UE (such as the UE_A) and the remote device (such as the UE_B) is a media interface 1 (MI1), and the interface contents are various media streams. A typical protocol is, for example, RTP or the like.

The media interface between an external device of the UE (such as the UE_A) and an external device of the remote device (such as the UE_B) is a media interface 2 (MI2), and the interface contents are various media streams. A typical protocol is, for example, RTP or the like.

The media interface between the UE (such as the UE_A) and the external device of the remote device (such as the UE_B) is a media interface 3 (MI3), and the interface contents are various media streams. A typical protocol is, for example, RTP or the like.

The media interface between the external device of the UE (such as the UE_A) and the remote device (such as the UE_B) is a media interface 4 (MI4), and the interface contents are various media streams. A typical protocol is, for example, RTP or the like.

It should be noted that the UE may have a part of the media streams located on the UE and another part of the media streams located on the external device(s). There may be multiple external devices.

FIG. 2 is a schematic structural diagram of an apparatus for implementing a call in a signalling architecture in an embodiment of the present invention. As shown in FIG. 2, the apparatus includes at least a second registration processing module 20, and a second call processing module 21.

The second registration processing module 20 is configured to perform a registration and an authentication of a UE according to a registration request from the UE.

The second call processing module 21 is configured to establish, according to a call request of a UE, media streams between the UE initiating the call request and a called UE.

Furthermore, the second call processing module 21 is further configured to end a session between the UE initiating the hang-up request and the called UE according to a hang-up request from the UE.

Furthermore, the second call processing module 21 is further configured to receive a request for calling the UE from a third UE and forward the request to the UE, receive an acknowledge from the UE, and establish media streams between the third UE and the UE called by the third UE.

Furthermore, the signalling system further includes a second stream transfer processing module 22 which is configured to: record multi-device and media stream information of a user according to a registration and a call of a third party; receive an instruction of partial-stream transfer from the Web server, and initiate a corresponding stream transfer operation; and return a stream transfer completing indication to the Web server after completing the stream transfer.

The apparatus shown in FIG. 2 may be disposed in the signalling system of the signalling architecture of the present invention.

FIG. 3 is a schematic structural diagram of the Web server in an embodiment of the present invention. As shown in FIG. 3, the Web server includes at least a second page processing module 30.

The second page processing module 30 is configured to provide a corresponding page and script to a UE according to an acquirement request from the UE.

Furthermore, the second page processing module 30 is further configured to provide the corresponding page and script to the called UE according to an acquirement request form the called UE in a case that the called UE is a Web-based UE.

Furthermore, the second page processing module 30 is further configured to provide the corresponding page and script to the UE again upon receiving a Post request from the UE.

Furthermore, the Web server further includes a third stream transfer processing module 31 which is configured to: send the instruction of partial-stream transfer to the signalling system according to the Post request carrying a partial-stream transfer from the UE; and receive a stream transfer completing indication from the signalling system.

The apparatus shown in FIG. 3 may be disposed in the Web server of the signalling architecture of the present invention.

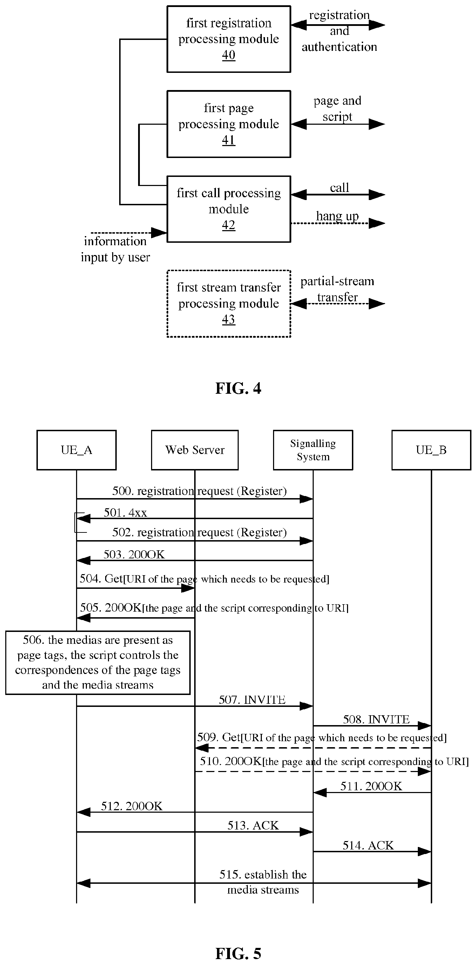

FIG. 4 is a schematic structural diagram of a user equipment in an embodiment of the present invention. As shown in FIG. 4, the user equipment includes at least a first registration processing module 40, a first page processing module 41, and a first call processing module 42.

The first registration processing module 40 is configured to perform a registration and an authentication by the signalling system.

The first page processing module 41 is configured to acquire, by the Web server, a page and a script which need to request.

The first call processing module 42 is configured to acquire, after the registration and the authentication are successful, call information by the acquired script according an operation on the page, and control calling out by the signalling system to establish media streams with a called UE.

Furthermore, the first registration processing module 40 registers and authenticates to the signalling system by using a signalling system ID.

The first page processing module 41 logs into the Web server by using the signalling system ID, and uses authentication parameters of the signalling system.

Furthermore, the first registration processing module 40 registers and authenticates to the signalling system by using the signalling system ID.

The first page processing module 41 is further configured to set an association relationship between the signalling system ID and a Web server ID, and a script control; the first page processing module logs into the Web server by using the Web server ID.

Furthermore, the first call processing module 42 is further configured to accept information input by a user, send a Post request to the Web server to deliver the information input by the user to the Web server.

Furthermore, the first call processing module 42 is further configured to end the session with the called UE by the signalling system.

Furthermore, the first call processing module 42 is further configured to: receive the call request from the third UE of the signalling system, control to present two videos on the page and return an acknowledge to the signalling system; and establish media streams with the third UE.

Furthermore, in the first registration processing module 40, one SIP_UA of the UE where the first registration processing module 40 is located initiates the registration request.

One SIP_UA includes one or more pages. Each page includes one or more calls.

Furthermore, the first page processing module 41 is further configured to acquire, according to a HTTP URI carried in a UI URI header from the signalling system, a URI of the page which needs to be requested.

The UI URI header of the signalling system may be carried in an INVITE sent by the signalling system to the UE where the signalling system is located; or it may be carried in an INVITE sent to the signalling system from a UE initiating a call.

Alternatively, the first page processing module 41 is further configured to initiate, to the signalling system, a registration request carrying a capability signature indicating to support the UI URI header. In this way, when the second call processing module of the signalling system sends the INVITE, the INVITE may carry the UI URI header.

Furthermore, the user equipment further includes a first stream transfer processing module 44 which is configured to: initiate a Post request to the Web server according to a setting of partial-stream transfer from a user; perform a corresponding stream transfer operation by the signalling system to transfer a part of streams to a corresponding UE.

Correspondingly, the first call processing module 42 is further configured to, when receiving from a user a click on a link for a video call of an external device (such as sports glasses), trigger, by the script, a pairing connection between the UE where the first call processing module 42 is located and an external device (such as AR glasses) and interact with the AR glasses to acquire the SDP; and to establish media streams between the AR glasses and the called UE by the signalling system and the Web server.

Furthermore, the first stream transfer processing module 44 is further configured to: trigger, by the script, connections to multiple cameras and correspondences with control streams, and interact with an external device (such as 3D camera array) to acquire the SDP, when receiving from a user a click on a link for a holographic call; or, trigger, by the script, connections to external devices (such as the AR glasses and multiple cameras) and correspondences with control streams and interact with the external devices (such as the AR glasses) to acquire the SDP, when receiving the page and the script requested from the Web server; and multiple video streams for describing images of the UE where the first stream transfer processing module 44 is located are delivered to the AR glasses of a peer UE from the 3D camera array of the UE where the first stream transfer processing module 44 is located, and holographic images from the UE where the first stream transfer processing module 44 is located are presented by the AR glasses of the peer UE according to the multiple video streams; or, multiple video streams for describing images of the peer UE are delivered to the AR glasses of the UE where the first call processing module 44 is located from the 3D camera array of the peer UE, and holographic images of the peer UE are presented by the UE where the first stream transfer processing module 44 is located according to the multiple video streams.

The apparatus shown in FIG. 4 may be disposed in the user equipment of the signalling architecture of the present invention.

On one hand, as for the signalling system in the signalling architecture, a method for implementing call in the signalling architecture provided by the present invention includes: the signalling system performing a registration and an authentication of a UE according to a registration request from the UE; establishing, according to a call request from a UE, media streams between the UE initiating the call request and a called UE.

Furthermore, the method further includes: the signalling system recording multi-device and media stream information of a user according to a registration and a call of a third party; receiving an instruction of partial-stream transfer from the Web server in the signalling architecture and initiating a corresponding stream transfer operation; and returning a stream transfer completing indication to the Web server in the signalling architecture after completing the stream transfer.

Furthermore, when the signalling system receives a request for calling the UE from a third UE, the method further includes: forwarding the received request to the UE; receiving an acknowledge from the UE; and establishing media streams between the third UE and the UE called by the third UE.

Furthermore, when the signalling system receives a hang-up request from the UE, the method further includes: ending a session between the UE initiating the hang-up request and the called UE according to the hang-up request from the UE.

On the other hand, as for the Web server in the signalling architecture, a method for implementing call in the signalling architecture provided by the present invention includes: the Web server providing a corresponding page and script to a UE according to an acquirement request from the UE.

Furthermore, the method further includes: the Web server sending an instruction of partial-stream transfer to the signalling system in the signalling architecture according to a Post request carrying a partial-stream transfer from the UE; and receiving a stream transfer completing indication from the signalling system in the signalling architecture.

Furthermore, in a case that a UE called by the UE is a Web-based UE, the method further includes: the Web server providing the corresponding page and script to the called UE according to an acquirement request form the called UE.

Furthermore, the step of providing the corresponding page and script to the UE is carried out after the Web server receives the Post request from the UE.

On still another hand, as for a UE in the signalling architecture, a method for implementing a call in the signalling architecture provided by the present invention includes: the UE performing a registration and an authentication by the signalling system; the UE acquiring, by the Web server, a page and a script which need to request; after the registration and the authentication of the UE are successful, the acquired script acquiring call information according an operation on the page, and the signalling system controlling to call out to establish media streams with a called UE.

Furthermore, the method further includes: the UE initiating a Post request to the Web server in the signalling architecture according to a setting of partial-stream transfer from a user; performing a corresponding stream transfer operation by the signalling system in the signalling architecture so as to transfer a part of streams to a corresponding UE; when the UE receives from a user a click on a link for a video call of an external device, the script triggering a pairing connection between the UE and the external device, and interacting with the external device to acquire the SDP; establishing media streams between the external device and the called UE by the signalling system and the Web server.

Furthermore, when the UE receives from a user a click on a link for a holographic call, the method further includes: the script triggering connections to multiple cameras and correspondences with control streams, and interacting with the external devices to acquire the SDP; or, when receiving the page and the script requested from the Web server, triggering connections to the external devices and the correspondence with the control streams, and interacting with the external devices to acquire the SDP; and delivering multiple video streams for describing images of said UE to an external device of a peer UE, and presenting holographic images from said UE by the external device of the peer UE according to the multiple video streams; or, delivering multiple video streams for describing images of the peer UE to an external device of said UE, and presenting holographic images of the peer UE by said UE according to the multiple video streams.

Wherein, the UE registers and authenticates to the signalling system by using the signalling system ID; the UE logs into the Web server by using the signalling system ID, and uses authentication parameters of the signalling system.

Wherein, the UE sets an association relationship between the signalling system ID and the Web server ID, and a script control; in this case, the UE registers and authenticates to the signalling system by using the signalling system ID; and the UE logs into the Web server by using the Web server ID.

Furthermore, when the UE accepts information input by a user, sending a Post request to the Web server to deliver the information input by the user to the Web server.

Furthermore, the method further includes: the UE ends a session with the called UE by the signalling system.

Furthermore, when the UE receives a call request from a third UE from the signalling system, the method further includes: the UE controlling to present two videos on the page and return an acknowledge to the signalling system; and establishing media streams with the third UE.

It is one SIP_UA of the UE that initiates the registration request.

Wherein, said one SIP_UA contains one or more pages, and each page includes one or more calls.

Wherein, the UE acquires a URI of the page which needs to be requested according to a HTTP URI carried in a UI URI header from the signalling system.

Wherein, the UI URI header of the signalling system is carried in the INVITE sent by the signalling system to the UE where the signalling system is located; or carried in the INVITE sent to the signalling system from the UE initiating the call.

Furthermore, when the UE initiates a registration request to the signalling system, the registration request carries a capability signature indicating to support the UI URI header.

The implementation of the present invention will be described in detail below with reference to specific embodiments.

FIG. 5 is a schematic flowchart of a first embodiment that a signalling architecture implements a call in an embodiment of the present invention; as shown in FIG. 5, it includes the following steps step 500 to step 515.

At step 500, the UE_A sending a registration request (Register) to the signalling system.

At step 501, the signalling system returning a 4xx message carrying an authentication challenge therein, when there is an authentication need.

At step 502, the UE_A completing the authentication challenge, carrying information in a second registration request and sending it to the signalling system.

At step 503, the signalling system approving the authentication, and returning 200OK.

At step 504, the UE_A sending to the Web Server a Get request (typically, HTTP protocol) carrying a uniform resource identifier (URI) (typically, HTTP URI) of the page which needs to be requested by the UE_A.

At step 505, the Web Server making 200OK carry the page and script (i.e., HTML+JS) corresponding to the URI, and returning the same to the UE_A.

At step 506, the script acquiring call information according to an operation of the user on the page (such as dialing, setting a required media type, etc.); wherein the media types are presented as page tags, and the script controls the correspondences between the page tags and the media streams, such as <video>, <audio>, or the like.

At step 507, the script controlling to call out, and sending to the signalling system an INVITE which carries a SDP offer therein.

At step 508, the signalling system routing the INVITE to the called UE_B, wherein the UE_B may be a Web-based UE, or may be an existing signalling terminal, such as the IMS-based voice service (VoLTE) UE, or the like.

If the UE_B is also a Web-based UE, the method may include steps 509 and 510:
At step 509, the UE_B sending a Get request to the Web Server to acquire a page from the Web Server.

It should be noted that, if the operator of the UE_A is different from that of the UE_B, the signalling system and the Web Server corresponding to the called party are devices different from those corresponding to the calling party, respectively.

At step 510, the Web Server making 200OK carry the page and script (such as HTML+JS) corresponding to the URI, and returning the same to the UE_B.

At step 511, the UE_B returning a response message carrying a SDP answer therein to the signalling system. FIG. 5 shows 200OK as an example of the response message; in practice, according to the SIP message, the response message may be any other 18x message, such as 183 message, or the like.

If the UE_B is a Web-based UE, signalling interaction for the UE_B may be controlled by the script, and the script may also control the correspondences between the page tags and the media streams, such as <video>, <audio>, or the like.

At step 512, the signalling system forwarding 200OK to the UE_A.

At step 513, the UE_A sending an ACK message to the signalling system.

At step 514, the signalling system forwarding the received ACK message to the UE_B.

At step 515, at this point, establishing media streams between the UE_A and the UE_B.

The first embodiment that the signalling architecture implements a call as shown in FIG. 5 is an extension of the mode that an existing IMS terminal initiates a call after a registration.

It should be noted that, as for media types and tags that are supported by the system (or the browser), the script can use them directly; as for media types and tags that are not supported by the system (or the browser), the script may control codecs of the media to which it belongs. Detailed descriptions thereof may refer to subsequent descriptions for FIGs. 26 and 27.

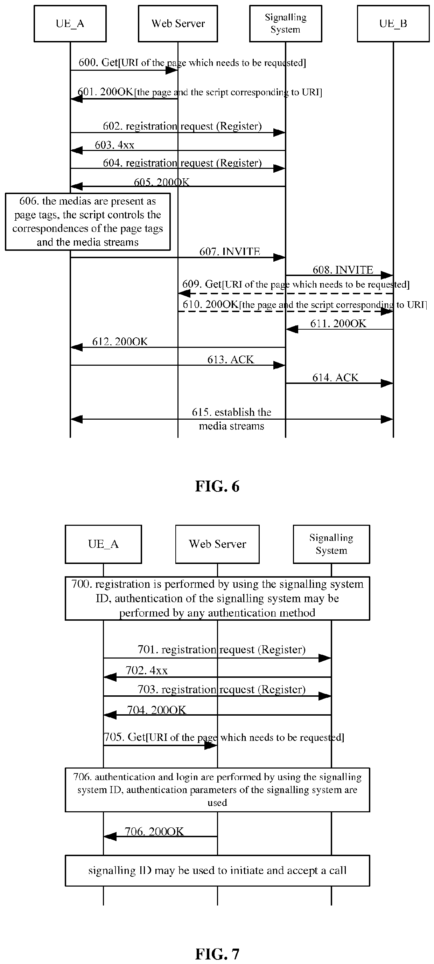

FIG. 6 is a schematic flowchart of a second embodiment that a signalling architecture implements a call in an embodiment of the present invention; as shown in FIG. 6, it includes the following steps step 600 to step 615.

At step 600, the UE_A sending to the Web Server a Get request (typically, HTTP protocol) carrying therein a URI (typically, HTTP URI) of the page which needs to be requested by the UE_A.

At step 601, the Web Server making 200OK carry the page and script (i.e., HTML+JS) corresponding to the URI, and returning the same to the UE_A.

At step 602, the UE_A sending a registration request to the signalling system.

At step 603, the signalling system returning a 4xx message carrying an authentication challenge therein, when there is an authentication need.

At step 604, the UE_A completing the authentication challenge, carrying information in a second registration request and sending it to the signalling system.

At step 605, the signalling system approving the authentication, and returning 200OK.

At step 606, the script acquiring call information according to the URI signalling or an operation of the user on the page (such as dialing, setting a required media type, etc.); wherein the media types are presented as page tags, and the script controls the correspondences between the page tags and the media streams; such as <video>, <audio>, or the like.

At step 607, the script controlling to call out, and sending to the signalling system an INVITE which carries a SDP offer therein.

At step 608, the signalling system routing the INVITE to the called UE_B, wherein the UE_B may be a Web-based UE, or may be an existing signalling terminal, such as the VoLTE UE, or the like.

If the UE_B is also a Web-based UE, the method may include steps 609 and 610:
At step 609, the UE_B sending a Get request to the Web Server to acquire a page.

It should be noted that, if the operator of the UE_A is different from that of the UE_B, the signalling system and the Web Server corresponding to the called party are devices different from those corresponding to the calling party, respectively.

At step 610, the Web Server making 200OK carry the page and script (such as HTML+JS) corresponding to the URI, and returning the same to the UE_B.

At step 611, the UE_B returning a response message carrying a SDP answer therein to the signalling system. FIG. 6 shows 200OK as an example of the response message; in practice, according to the SIP message, the response message may be any other 18x message, such as 183 message, or the like.

If the UE_B is a Web-based UE, signalling interaction for the UE_B may be controlled by the script, and the script may also control the correspondences between the page tags and the media streams, such as <video>, <audio>, or the like.

At step 612, the signalling system forwarding 200OK to the UE_A.

At step 613, the UE_A sending an ACK message to the signalling system.

At step 614, the signalling system forwarding the received ACK message to the UE_B.

At step 615, at this point, establishing media streams between the UE_A and the UE_B.

It should be noted that, the embodiment of implementing a call as shown in FIG. 6 is suitable for encapsulating the signalling URI into an HTTP URI for presentation and sharing it in various other applications (or browsers), and the user clicks on the URI to establish a call to the URI. For example, the URI of a video conference is shared in the group chat (a third party group chat App), so that the users in the group can click the link to join the conference.

FIG. 7 is a schematic flowchart of a first embodiment of implementing a registration of a user equipment based on a signalling architecture in an embodiment of the present invention. As shown in FIG. 7, in the first embodiment, it is assumed that the signalling system ID is the same as the Web Server ID, that is, the signaling system and the Web Server use the same ID, and the process includes step 700 to step 707.

At step 700, the UE_A registering to the signalling system by using the signalling system ID.

The signalling system may perform authenticating in any way, such as Authentication and Key Agreement (AKA), Digest authentication, or the like.

At step 701, the UE_A sending a registration request to the signalling system.

At step 702, the signalling system returning a 4xx message which carries an authentication challenge therein, when there is an authentication need.

At step 703, the UE_A completing the authentication challenge, carrying information in a second registration message and sending it to the signalling system.

At step 704, the signalling system approving the authentication, and returning 200OK.

At step 705, the UE_A sending to the Web Server a Get request (typically, HTTP protocol) carrying a URI (typically, HTTP URI) of the page which needs to be requested by the UE_A.

At step 706, the UE_A authenticating to and logging into the Web Server by using the signalling system ID, and using the authentication parameters of the signalling system.

The Web Server may need to interact with the signalling system to complete the authentication for the UE_A. The authentication parameters include some parameters as generated by the keys. In order to authenticate these authentication parameters, it is necessary to use the keys of the signalling system, if these keys are not available in the Web Server. Therefore, the Web Server needs to interact with the signalling system so as to implement the authentication by using the authentication parameters of the signaling system.

At step 707, the Web Server making 200OK carry the page and script (i.e., HTML+JS) corresponding to the URI and returning the same to the UE_A.

At this point, the UE_A can initiate or accept a call by using the signalling system ID.

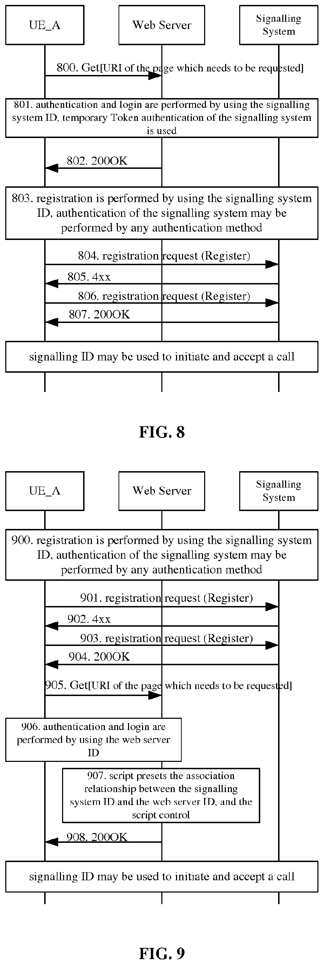

FIG. 8 is a schematic flowchart of a second embodiment of implementing a registration of a user equipment based on a signalling architecture in an embodiment of the present invention. As shown in FIG. 8, in the second embodiment, it is assumed that the signalling system ID is the same as the Web Server ID, and the process includes step 800 to step 807.

At step 800, the UE_A sending to the Web Server a Get request (typically, HTTP protocol) carrying therein a URI (typically, HTTP URI) of the page which needs to be requested.

At step 801, the UE_A authenticating to and logging into the Web Server by using the signalling system ID; for example, the UE_A authenticating to the Web Server by using a temporary Token of the signalling system, or by the OAuth technology.

The Web Server may need to interact with the signalling system to complete the authentication for the UE_A.

It should be noted that, the authentication by using the temporary Token is suitable for the case that the Web Server is located in an untrustworthy domain of the signalling system; for instance, the Web Server is a device of a third party.

At step 802, the Web Server making 200OK carry the page and script (i.e., HTML+JS) corresponding to the URI and returning the same to the UE_A.

At step 803, the UE registering to the signalling system by using the signalling system ID.

In the present embodiment, the signalling system may perform authenticating in a relative simple way, such as the Digest authentication.

At step 804, the UE_A sending a registration request to the signalling system.

At step 805, the signalling returning a 4xx message carrying an authentication challenge therein, when there is an authentication need.

At step 806, the UE_A completing the authentication challenge, carrying information in a second registration message and sending it to the signalling system.

At step 807, the signalling system approving the authentication, and returning 200OK.

At this point, the UE_A can initiate or accept a call by using the signalling system ID.

FIG. 9 is a schematic flowchart of a third embodiment of implementing a registration of a user equipment based on a signalling architecture in an embodiment of the present invention; as shown in FIG. 9, in the third embodiment, it is it is assumed that the signalling system ID is not the same as the Web Server ID, and the process includes step 900 to step 908.

At step 900, the UE_A registering to the signalling system by using the signalling system ID.

The signalling system may perform authenticating in any way, such as Authentication and Key Agreement (AKA), Digest authentication, or the like.

At step 901, the UE_A sending a registration request to the signalling system.

At Step 902, the signalling system returning a 4xx message which carries an authentication challenge therein, when there is an authentication need.

At step 903, the UE_A completing the authentication challenge, carrying information in a second registration message and sending it to the signalling system.

At step 904, the signalling system approving the authentication, and returning 200OK.

At step 905, the UE_A sending to the Web Server a Get request (typically, HTTP protocol) carrying a URI (typically, HTTP URI) of the page which needs to be requested by the UE_A.

At step 906, the UE_A authenticating to and logging into the Web Server by using the Web Server ID.

At step 907 to step 908, the script presetting an association relationship between the two IDs (i.e., the signalling system ID and the Web Server ID) and the script control, that is to say, the signalling system ID can be mapped to the Web Server ID, and vice versa. The Web Server makes 200OK carry the page and the script (i.e., HTML+JS) corresponding to the URI and returns the same to the UE_A.

For example, it is assumed that the signalling system ID of a user is ID1, and the Web Server ID of the same user is ID2, and the association relationship between the two IDs (i.e., the signalling system ID and the Web Server ID) is preset, that is, the association relationship between the ID1 and the ID2 is established; the script may control to map the ID1 to the ID2, or map the ID2 to the ID1.

Wherein, the signalling system ID is registered in advance (e.g., it is the user's phone number). The association relationship between the signalling system ID and the Web Server ID may include a correspondence between the two IDs of a calling party (a buyer), and may also include a correspondence between the two IDs of a called party (a seller).

At this point, the UE_A may initiate or accept a call by using the signalling ID, for example, initiate a call with respect to the signalling system ID by clicking the Web Server ID.

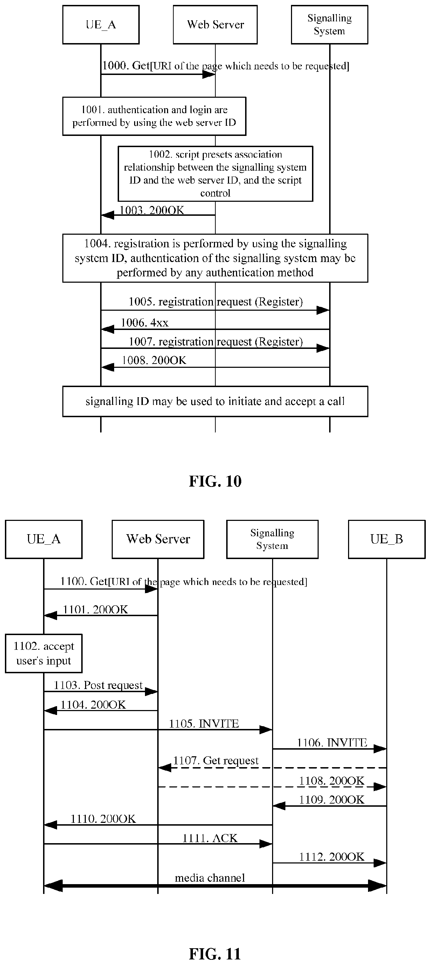

FIG. 10 is a schematic flowchart of a fourth embodiment of implementing a registration of a user equipment based on a signalling architecture in an embodiment of the present invention. As shown in FIG. 10, in the fourth embodiment, it is it is assumed that the signalling system ID is not the same as the Web Server ID, and the process includes step 1000 to step 1008.

At step 1000, the UE_A sending to the Web Server a Get request (typically, HTTP protocol) carrying therein a URI (typically, HTTP URI) of the page which needs to be requested.

At step 1001, the UE_A authenticating to and logging into the Web Server by using the Web Server ID.

At step 1002 to step 1003, presetting an association relationship between two IDs (i.e., the signalling system ID and the Web Server ID), and script control. The Web Server makes 200OK carry the page and the script (i.e., HTML+JS) corresponding to the URI and returns it to the UE_A.

In the present embodiment, the signalling system may not open the commonly used telephone number resources to the external Web Server, but distribute a number to a certain Web Server (such as the signalling system ID) in advance. The Web Server maintains the correspondence between the Web Server ID and the signalling system ID, and the script controls the correspondence. The correspondence includes the correspondence between the above two IDs of the calling party (the buyer), and also the correspondence between the two IDs of the called party (the seller).

At step 1004, the UE_A registering to the signalling system by using the signalling system ID.

The signalling system may perform authenticating in any way, such as AKA, Digest authentication, or the like.

At step 1005, the UE_A sending a registration request to the signalling system.

At step 1006, the signalling system returning a 4xx message which carries an authentication challenge therein, when there is an authentication need.

At step 1007, the UE_A completing the authentication challenge, carrying information in a second registration message and sending it to the signalling system.

At step 1008, the signalling system approving the authentication, and returning 200OK.

At this time, the UE_A can initiate or accept a call by using the signalling ID, e.g., initiate a call with respect to the signalling system ID by clicking the Web Server ID.

The Web Server may be a shopping website. When a user browses to select an item, he/she may directly click on the Web Server ID (such as the contact phone icon) of a seller; the script controls to initiate a call with respect to the signalling system ID which is the ID associated with the Web Server ID.

Furthermore, by means of an external device or the like, the user and the seller can be provided with a holographic "face-to-face" shopping experience, and the product can be seen holographically. With the holographic pressure-sensitive gloves, the user can even experience the shape and texture of a product. With Virtual Reality (VR) technology, Augmented Reality (AR) technology, etc., the user can even see the layout effect of furniture products at home, the effect of wearing clothing goods on the body, and the like.

FIG. 11 is a schematic flowchart of a first embodiment of changing a page based on a signalling architecture in an embodiment of the present invention. As shown in FIG. 11, before a user equipment (such as the UE_A) initiates a call, the process may include step 1100 to step 1112.

At step 1100, the UE_A sending to the Web Server a Get request (typically, HTTP protocol) carrying therein a URI (typically, HTTP URI) of the page which needs to be requested.

At step 1101, the Web Server making 200OK carry the page and the script (i.e., HTML+JS) corresponding to the URI and returning the same to the UE_A.

At step 1102, the UE_A accepting a user's input, such as dialing or the like.

At step 1103, the UE_A sending to the Web Server a Post request so as to deliver the information input by the user to the Web Server, wherein the Post request carries therein the information input by the user, such as the number to dial, or the like.

A step 1104, the Web Server sending 200OK which carries new page and script (i.e., new HTML+JS).

Step 1105 to step 1112 are the processes of initiating a call, and will no longer be described here.

Finally, a media channel is established between the UE_A and the UE_B.

In the present embodiment, the mechanism of changing a page according to the user's operation is particularly suitable for an application scenario of, for example, pushing corresponding advertisements and alarm information in the page according to the user dialing or the like.

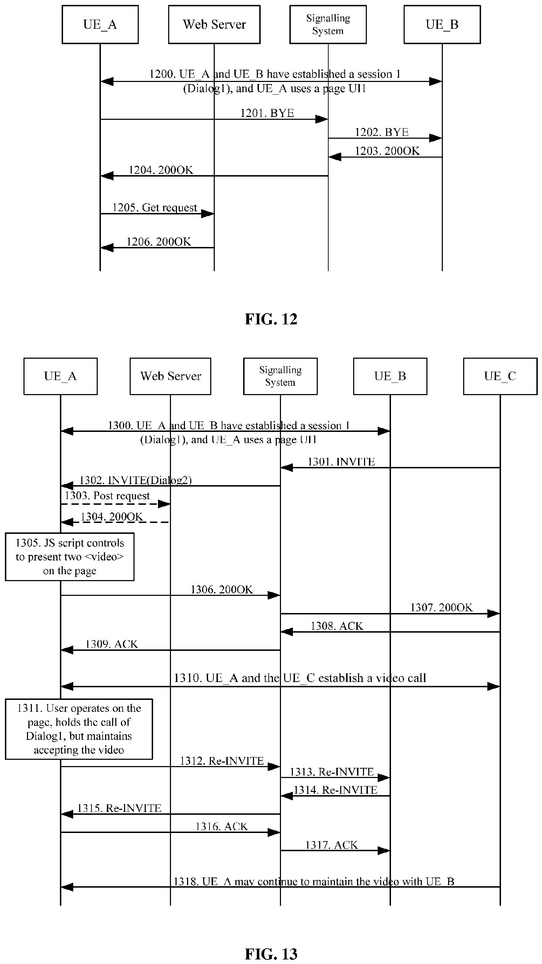

FIG. 12 is a schematic flowchart of a second embodiment of changing a page based on a signalling architecture in an embodiment of the present invention. As shown in FIG. 12, it is assumed that, after a call is established between the user equipments (such as the UE_A and the UE_B), the process may include step 1200 to step 1206.

At step 1200, assuming that a call (such as Dialog1) has been established between the UE_A and the UE_B, and assuming that, at this time, the page used by the UE_A is the user interface 1 (UI1).

At step 1201, the UE_A hanging up, and sending BYE to the signalling system.

At step 1202, the signalling system forwarding BYE to the UE_B.

At step 1203, the UE_B returning 200OK to the signalling system.

At step 1204, the signalling system forwarding 200OK to the UE_A.

At step 1205, the UE_A sending to the Web Server a Get request (typically, HTTP protocol) carrying therein a URI (typically, HTTP URI) of a new page which needs to be requested.

At step 1206, the Web Server making 200OK carry the new page and the script (i.e., HTML+JS) corresponding to the URI and returning the same to the UE_A.

The mechanism of changing a page according to the user's operation in the present embodiment is particularly suitable for an application scenario of, for example, pushing corresponding advertisements and alarm information in the page according to the user dialing or the like. According to the technical solution provided by the present embodiment, for example, after a user makes a call and hangs up, the relevant advertisements can be pushed purposefully according to the number dialed by the user.

FIG. 13 is a flowchart of an embodiment of implementing single-page multiple calls based on a signalling architecture in an embodiment of the present invention. With the Web-based IMS architecture provided by the present invention, in a scenario of the single-page multiple dialogs (such as the scenario of multiple video calls), the user can continue to hold the call to keep the user's video while making a video call with a newly connected user. As shown in FIG. 13, the single-page multiple calls process includes step 1300 to step 1318.

At step 1300, assuming that a call (such as the Dialog1 in the present embodiment) has been established between the UE_A and the UE_B, wherein the UE_A uses UI1.

At step 1301, at this time, the UE_C calling the UE_A, and sending an INVITE to the signalling system.

At step 1302, the signalling system forwarding the INVITE to the UE_A.

If the UE_A needs to send a Post request to the Web Server to acquire a new page and script, then the following step 1303 is included: the UE_A sending the Post request to the Web Server.

At step 1304, the Web Server returning to the UE_A 200OK which carries the new page and script therein. Thus, the page script of the UE_A processes a new call (such as the Dialog2 in the present embodiment).

It should be noted that, if the previous script has a logic for processing multiple calls, the steps 1303 and 1304 may be omitted.

At step 1305, the JS script controlling to present two videos <video> on the page, wherein the new video tags corresponds to the new call.

At step 1306, the script controlling to return 200OK to the signalling system.

At step 1307, the signalling system forwarding 200OK to the UE_C.

At step 1308, the UE_C returning the ACK to the signalling system.

At step 1309, the signalling system forwarding the ACK to the UE_A.

At step 1310, establishing a video call between the UE_A and the UE_C.

At step 1311, the user operating on the page to maintain the call of Dialog 1, while keeping accepting the established video with the UE_C.

At step 1312, the scrip controlling to send to the signalling system a Re-INVITE of the call holding with the UE_B.

At step 1313, the signalling system forwarding the Re-INVITE to the UE_B.

At step 1314, the UE_B returning 200OK to the signalling system.

At step 1315, the signalling system forwarding 200OK to the UE_A.

At step 1316, the UE_A sending an ACK to the signalling system.

At step 1317, the signalling system forwarding the ACK to the UE_B.

At step 1318, the UE_A may continue to keep the video with the UE_B.

With the method of the embodiment of the present invention, the page technology may be used in a complex control of calls to make the user interface presentations and the user operations unified.

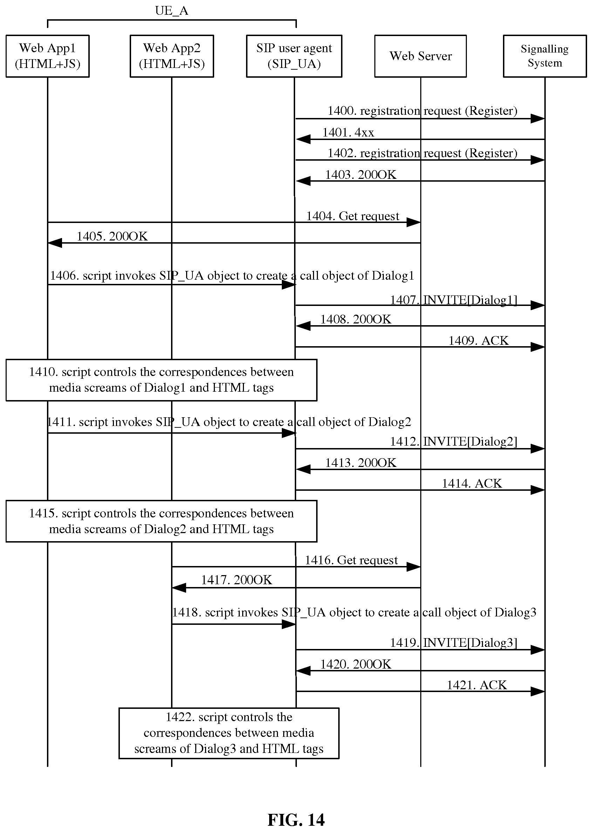

FIG. 14 is a flowchart of a first embodiment of establishing a correspondence between the SIP_UA and the pages in an embodiment of the present invention. A SIP user agent (SIP_UA) is a SIP registration unit that can contain multiple pages. Each page can contain multiple calls (Dialogs). As shown in Figure 14, the establishing the one-to-many correspondence between the SIP_UA and the pages includes step 1400 to step step 1422.

At step 1400, a SIP_UA of the UE_A sending a registration request to the signalling system.

At step 1401, the signalling system returning 4xx which carries an authentication challenge therein, when there is an authentication need.

At step 1402, the UE_A completing the authentication challenge, carrying information in a second registration message and sending it to the signalling system.

At step 1403, the signalling system approving the authentication, and returning 200OK.

At step 1404, the web application (Web Appl) sending to the Web Server a Get request (typically, HTTP protocol) carrying therein a URI (typically, HTTP URI) of the page which needs to be requested.

At step 1405, the Web Server making 200OK carry the page and the script (HTML+JS) corresponding to the URI and returns the same to the Web App1.

At step 1406, the script invoking the SIP_UA object to create a call object of Dialog 1.

At step 1407, the SIP_UA sending to the signalling system an INVITE carrying therein the Dialog 1.

At step 1408, the signalling system forwarding the received 200OK to the SIP_UA. (the descriptions of the operations of the called party are omitted.)

At step 1409 to step 1410, the SIP_UA sending an ACK to the signalling system, and the script controlling the correspondence between the media scream of the Dialog 1 and the HTML tag.

At step 1411, the script invoking SIP_UA object to create a call object of Dialog2.

At step 1412, the SIP_UA sending to the signalling system an INVITE carrying therein the Dialog2.

At step 1413, the signalling system forwarding the received 200OK to the SIP_UA. Here the descriptions for the operations of the called party are omitted, as can be understood by those skilled in the art.

At step 1414 to step 1415, the SIP_UA sending a ACK to the signalling system, and the script controlling the correspondences between the media screams of the Dialog2 and the HTML tags.

At step 1416, the Web App2 sending to the Web Server a Get request (typically, HTTP protocol) which carries therein the URI (typically, HTTP URI) of the page which needs to be requested.

The Web Server in this step may be a device different from the Web Server of the Web App1.

At step 1417, the Web Server making 200OK carry the page and the script (HTML+JS) corresponding to the URI and returning the same to the Web App2.

At step 1418, the script invoking SIP_UA object to create a call object of Dialog3.

At step 1419, the SIP_UA sending to the signalling system an INVITE which carries the Dialog3 therein.

At step 1420, the signalling system forwarding the received 200OK to the SIP_UA. Here the descriptions for the operations of the called party are omitted, as can be understood by those skilled in the art.

At step 1421 to step 1422, the SIP_UA sending an ACK to the signalling system, and the script controlling the correspondences between the media streams of the Dialog3 and the HTML tags.

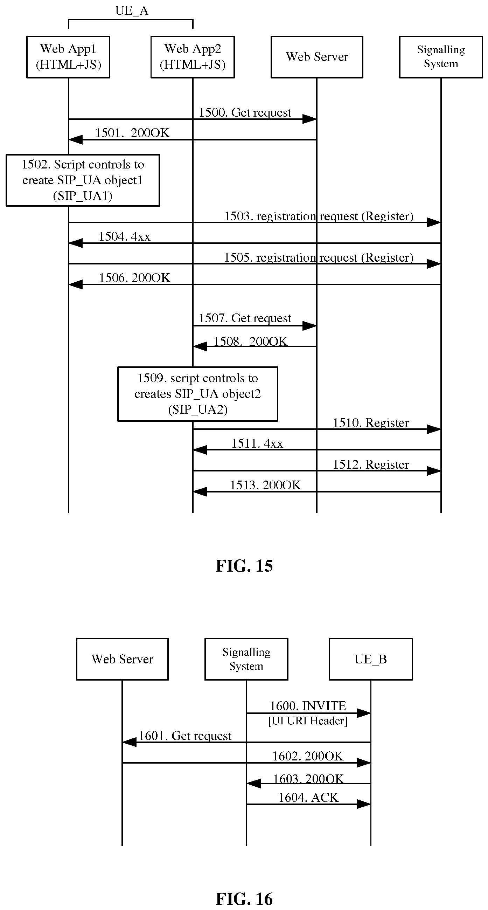

FIG. 15 is a flowchart of a second embodiment of establishing a correspondence between the SIP_UA and the pages in an embodiment of the present invention.

At step 1500, the Web App 1 sending to the Web Server a Get request (typically, HTTP protocol) which carries therein the URI (typically, HTTP URI) of the page which needs to be requested.

At step 1501, the Web Server making 200OK carry the page and the script (i.e. HTML+JS) corresponding to the URI, and returning the same to the Web App1.

At step 1502, the script controlling to create SIP_UA object 1 (SIP_UA1).

At step 1503, the SIP_UA1 of the UE_A sending a registration request to the signalling system.

At step 1504, the signalling system returning 4xx carrying an authentication challenge therein, when there is an authentication need.

At step 1505, the UE_A completing the authentication challenge, carrying information in a second registration message and sending the same to the signalling system.

At step 1506, the signalling system approving the authentication, and returning 200OK.

At step 1507, the Web App2 sending to the Web Server a Get request (typically, HTTP protocol) which carries therein the URI (typically, HTTP URI) of the page which needs to be requested.

At step 1508, the Web Server making 200OK carry therein the page and the script (HTML+JS) corresponding to the URI, and returning the same to the Web App1.

At step 1509, the script controlling to create SIP_UA object 2 (SIP_UA2).

At step 1510, the SIP_UA2 of the UE_A sending a registration request to the signalling system.

At step 1511, the signalling system returning 4xx which carries therein an authentication challenge, when there is an authentication need.

At step 1512, the UE_A completing the authentication challenge, carrying information in a second registration message, and sending the same to the signalling system.

At step 1513, the signalling system approving the authentication, and returning 200OK.

In all of the processes as described above, the page URI requested by the UE_A to the Web Server is considered to be the URI that the UE itself has grasped. The ability of carrying a page URI indication in a signalling message will be described below in conjunction with several embodiments.

FIG. 16 is a schematic flowchart of a first embodiment of indicating a page in an embodiment of the present invention. In the present embodiment, for example, the UI is indicated by the signalling system. As shown in FIG. 16, the process includes step 1600 to step 1604.

At step 1600, the signalling system sending to the UE an INVITE which carries therein the UI URI header.

In this step, the content of the UI URI header is that the UE_B is expected to be the HTTP URI of the page to be used in this call.

At step 1601, the UE_B receiving the INVITE, sending a Get request to the Web Server according to the HTTP URI in the UI URI header, wherein the Get request carries therein the URI (typically, HTTP URI) of the page which needs to be requested.

At step 1602, the Web Server carrying the page and the script (HTML+JS) corresponding to the URI in 200OK and returning the same to the UE_B.

At step 1603, the script controlling to return 200OK, and establishing the correspondences between the page tags and the media streams.

At step 1604, the signalling system returning an ACK to the UE_B.

The process shown in the present embodiment is suitable for an application scenario in which the signalling system directly calls a UE, for example, a conference application server (AS) calls a conference member UE actively.

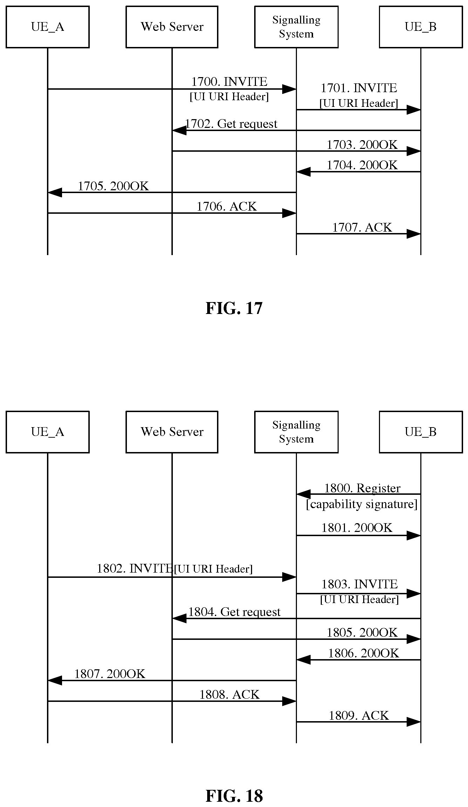

FIG. 17 is a schematic flowchart of a second embodiment of indicating a page in an embodiment of the present invention. In this embodiment, for example, the UI is indicated by a UE. As shown in FIG. 17, the process includes step 1700 to step 1707.

At step 1700, the UE_A calling the UE_B, and sending to the signalling system an INVITE which carries therein the UI URI header.

In this step, the content of the UI URI header is that the UE_B is expected to be the HTTP URI of the page to be used in this call.

At step 1701, the signalling system forwarding to the UE_B the INVITE which carries therein the UI URI header.

At step 1702, the UE_B receiving the INVITE, and sending a Get request to the Web Server according to the HTTP URI in the UI URI header, wherein the Get request carries therein the URI (typically, HTTP URI) of the page which needs to be requested.

At step 1703, the Web Server carrying the page and the script (HTML+JS) corresponding to the URI in 200OK, and returning the same to the UE_B.

At step 1704, the script controlling to return 200OK to the signalling system, and establishing the correspondences between the page tags and the media streams.

At step 1705, the signalling system forwarding 200OK to the UE_A.

At step 1706, the UE_A returning an ACK to the signalling system.

At step 1707, the signalling system forwarding the ACK to the UE_B.

Wherein, in addition to the URL itself of the page, the HTTP URI of the page may also include some indications related to the devices and the streams, for example, indicating that the call is a 3D holographic video call, indicating that the called party needs to use 3D glasses (an external device), or indicating that a part of the streams (such as the video, the audio, etc,) are transmitted to the holographic glasses device, another part of the streams (such as the message channels) are still on the user's mobile phone, and so on.

FIG. 18 is a schematic flowchart of a third embodiment of indicating a page in an embodiment of the present invention. The present embodiment takes the capability signature as an example. As shown in FIG. 18, the process includes step 1800 to step 1809.

At step 1800, the UE_B sending to the signalling system a registration request which carries a capability signature indicating that it supports the UI URI header.

At step 1801, the signalling system returning 200OK to the UE_B.

At step 1802, the UE_A calling the UE_B, and sending to the signalling system an INVITE which carries therein the UI URI header; wherein the content of the UI URI header is that the UE_B is expected to be the HTTP URI of the page to be used in this call.

At step 1803, the signalling system determining that the UE_B supports the UI URI header, and forwarding to the UE_B the received INVITE which carries therein the UI URI header.

At step 1804, the UE_B receiving the INVITE, and sending, according to the HTTP URI in the UI URI header, to the Web Server a Get request which carries therein the URI (typically, HTTP URI) of the page which needs to be requested.

At step 1805, the Web Server carrying the page and the script (HTML+JS) corresponding to the URI in 200OK, and returning the same to the UE_B.

At step 1806, the script controlling to return 200OK to the UE_B, and establishing the correspondences between the page tags and the media streams.

At step 1807, the signalling system forwarding 200OK from the UE_B to the UE_A.

At step 1808, the UE_A returning an ACK to the signalling system.

At step 1809, the signalling system forwarding the ACK to the UE_B.

As for the class-A terminal in the earlier application 201610159900.X, titled "an IMS multi-party video architecture method and system", if the traditional application software (App) mode is used, there is a problem that the custom development for this terminal has a high entry barrier, and it is difficult to popularize this terminal. This problem can be solved by using the Web-based IMS architecture of the present invention.

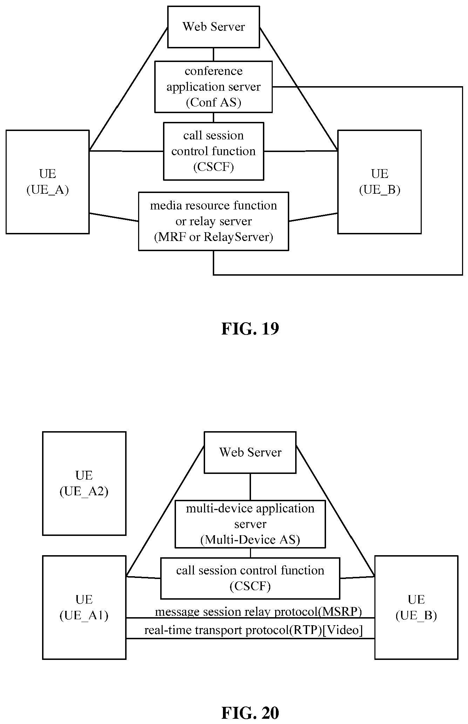

FIG. 19 is a schematic structural diagram of an embodiment of an application scenario of a signalling architecture in an embodiment of the present invention. As shown in FIG. 19, the conference AS (Conf AS), the call session control function (CSCF), the media resource function (MRF) or the relay server in FIG. 19 are regarded as a signalling system, that is, the signalling architecture shown in FIG. 1 of the present invention. At this time, the class-A terminal will be a Web App (page+JS script) containing multiple <video> tags such as <video>1, <video>2, <video>3 and <video>4. The script controls the correspondences between the <video> tags and multiple streams.

It is also possible to transfer a part of the media streams between multiple devices in a multi-device scenario by using the Web-based IMS architecture. FIG. 20 is a schematic structural diagram of another embodiment of an application scenario of a signalling architecture in an embodiment of the present invention. As shown in FIG. 20, the multi-device AS and CSCF in FIG. 20 are regarded as a signalling system, that is, the signalling architecture shown in Figure 1 of the present invention.

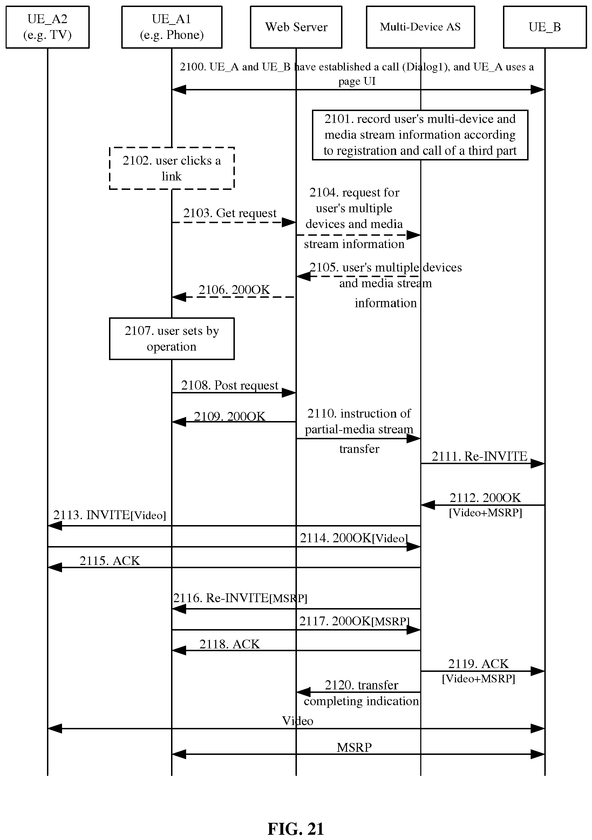

FIG. 21 is a schematic flowchart of an embodiment of implementing multi-device partial stream transfer in an embodiment of the present invention. As shown in FIG. 21, the process includes step 2100 to step 2119.

At step 2100, assuming that the UE_A1 has established a call (Dialog1) with UE_B, wherein a page used by the UE_A1 is UI.

At step 2101, recording the user's multi-device and media stream information according to the registration and the call of a third part.

At step 2102, the user needing to click a link to access the specific contents of the multiple devices in a case that the current interface does not present the specific contents of the multiple devices.

At step 2103, the UE_A1 sending to the Web Server a Get request which carries therein the URI (typically, HTTP URI) of the multi-device page which needs to be requested.

At step 2104, the Web Server sending to the multi-device AS a request, the contents of which are the multiple devices of the UE_A1 and the media stream information called by these devices currently.

At step 2105, the multi-device AS returning the multiple devices and the media stream information called by these devices currently.

At step 2106, the Web Server constructing the page+script according to the multiple devices of the UE_A1 and the media stream information called by these devices currently, carrying the same in 200OK and returning the same to the UE_A.

It should be noted that, if the current interface has presented the specific contents of the multiple devices, the step 2102 to step 2106 will be omitted.

At step 2107, in the present embodiment, assuming that the user sets the transfer of some streams by operations; for example, the video streams are transferred to the UE_A2 while the MSRP media streams still remain in the UE_A1.

At step 2108, the UE_A1 approving the Post request, and delivering the user's settings to the Web Server.

At step 2109, the Web Server returning 200OK.

At step 2110, the Web Server sending to the multi-device AS the instruction of transferring a part of the streams.

At step 2111 to step 2119, the multi-device AS initiating the transfer operation to transfer the video streams to the UE_A2 includes: the multi-device AS sending to the UE_B a Re-INVITE, and the UE_B returning 200OK which carries therein the video streams and the MSRP media streams; the multi-device AS transferring the video streams to the UE_A2 by the INVITE procedure; the multi-device AS leaving the MSRP streams in the UE_A1 by the Re-INVITE procedure; the multi-device AS returning to the UE_B an ACK which carries therein the video streams and the MSRP media streams.

At step 2120, the multi-device AS sending a transfer completing indication to the Web Server.

At this point, the video streams are between the UE_A2 and the UE_B, while the MSRP media streams are between the UE_A1 and the UE_B.

It is possible to introduce smoothly the virtual reality (VR) application and the augmented reality (AR) application on the IMS by using the Web-based IMS architecture provided by the present invention and combining external devices.

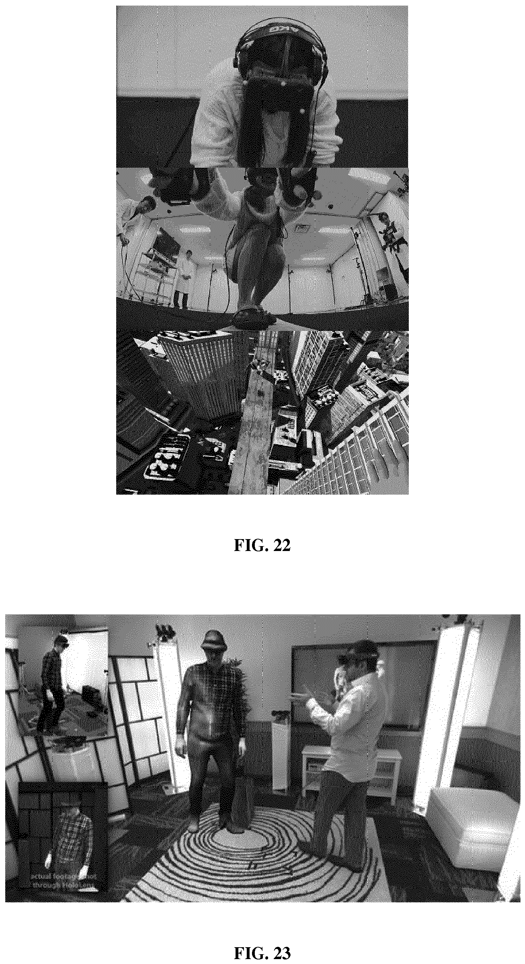

FIG. 22 is a schematic diagram of a scenario of an embodiment of a signalling architecture combined with a VR application in an embodiment of the present disclosure. As shown in FIG. 22, a VR application for air adventure may be created on the Web server, and the conference URI (HTTP URI) of the created VR application may be shared in the group chat, so that the members can enter the virtual scene and collaborate with each other in the adventure after they wear the VR helmets, and click the link of the conference URI.

As for an AR application, two scenarios can be considered: one is that a running user pairs with AR glasses (the external device) and the video call is presented on the AR glasses during running; the other is that, as shown in FIG. 23, which is a schematic diagram of a scenario of an embodiment of a signalling architecture of the present invention combined with an AR application, a holographic telephone application may be created on the Web server so that the holographic telephone can be realized for a user by the cooperation of the signalling system and the Web server.

The specific implementations of the scenario in which the Web-based IMS architecture provided by the present invention combined with the external device is employed will be described in detail below in conjunction with two scenarios of the AR call.

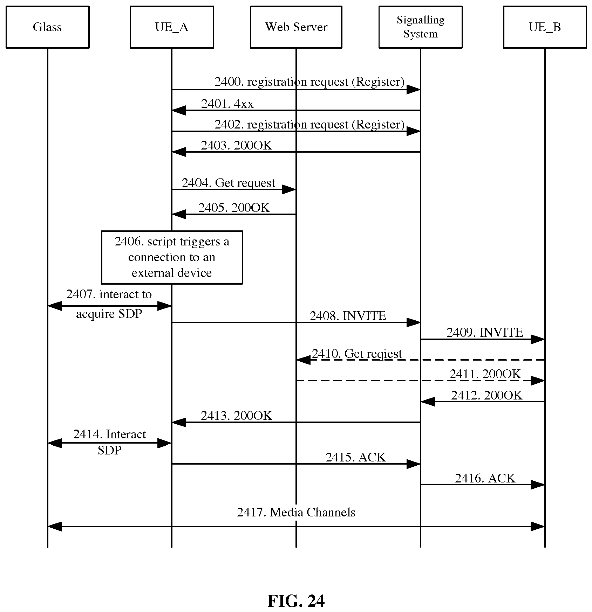

FIG. 24 is a schematic flowchart of a first embodiment of a signalling architecture combined with an AR call in an embodiment of the present invention. In this embodiment, making a video call in sports is taken as an example. In this embodiment, the external device is the AR glasses. As shown in FIG. 24, the process includes step 2400 to step 2417.

At step 2400, the UE_A sending a registration request to the signalling system.

At step 2401, the signalling system returning 4xx carrying therein an authentication challenge, when there is an authentication need.

At step 2402, the UE_A completing the authentication challenge, carrying information in a second registration message and returning the same to the signalling system.

At step 2403, the signalling system approving the authentication, and returning 200OK to the UE_A.

At step 2404, the UE_A sending to the Web Server a Get request (typically, HTTP protocol) which carries therein the URI (typically, HTTP URI) of the page which needs to be requested.

This step may be triggered by a user clicking "the link of the sports glasses video call".

At step 2405, the Web Server carrying the page and the script (HTML+JS) corresponding to the URI in 200OK, and returning the same to the UE_A.

At step 2406, the script triggering the pairing connection between the UE_A and an external device such as the AR glasses.

At step 2407, the UE_A interacting with the AR glasses to acquire the SDP.

At step 2408, the script controlling to call out, sending to the signalling system an INVITE which carries a SDP Offer therein.

At step 2409, the signalling system routing the INVITE to the called UE_B.

Wherein, the UE_B may be a Web-based UE, or may be an existing signalling terminal such as the VoLTE UE or the like.

If the UE_B is also a Web-based UE, the process will include step 2410 to step 2411:
At step 2410, the UE_B sending a Get request to the Web Server to acquire the page.

It should be noted that, if the operator of the UE_A is different from that of the UE_B, the signalling system and the Web Server corresponding to the UE_B may be devices different from those corresponding to the calling party such as the UE_A, respectively.

At step 2411, the Web Server carrying the page and the script (HTML+JS) corresponding to the URI in 200OK, and returning the same to the UE_B.

At step 2412, the UE_B returning to the signalling system a response message which carries a SDP answer therein.

In FIG. 24, 200OK is taken as an example of the response message; in practice, according to the SIP message, it may be other 18x message, such as 183 or the like.

If the UE_B is a Web-based terminal, the signalling interaction of the UE_B will be controlled by the script, and the script also controls the correspondences between the page tags and the media streams, such as <video>, <audio>, or the like.

At step 2413, the signalling system forwarding 200OK to the UE_A.

At step 2414, the script controlling the UE_A to exchange the SDP with the AR glasses.

At step 2415, the UE_A sending an ACK to the signalling system.

At step 2416, the signalling system forwarding the received ACK to the UE_B.

At step 2417, establishing media streams between the AR glasses of the UE_A and the UE_B so that the user can make a video call by using the AR glasses while exercising.

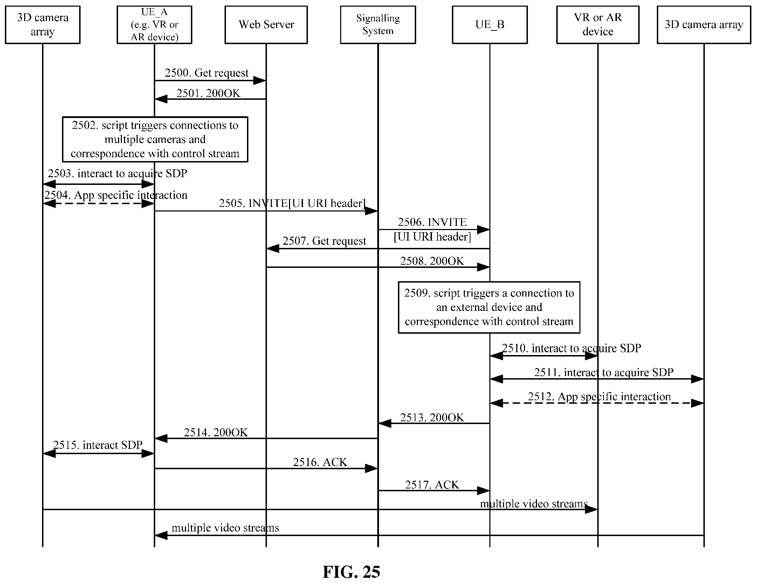

FIG. 25 is a schematic flowchart of a second embodiment of a signalling architecture combined with an AR call of the present invention. The holographic AR glasses themselves can be used as a signaling device such as the UE_A; they can also be used as an external device of the UE, such as the AR device of the UE_B. As shown in FIG. 25, the second embodiment of the AR call application includes step 2500 to step 2517.

At step 2500, the UE_A sending to the Web Server a Get request (typically, HTTP protocol) which carries therein the URI (typically, HTTP URI) of a holographic call page which needs to be requested.

This step can be triggered by a user click a link of a holographic call.

At step 2501, the Web Server carrying the page and script (i.e., HTML+JS) corresponding to the URI in 200OK, and returning the same to the UE_A.

At step 2502, the script triggering the connections to multiple cameras and the correspondence with the control stream.

At step 2503, the UE_A interacting with an external device (in the present embodiment, a 3D camera array) to acquire the SDP. It should be noted that there may be multiple external devices. If there are multiple external devices, multiple interactions with the external devices are required.

Optionally, at step 2504, the application may perform a specific interaction if needed, such as adjusting the pan&tilt angle of the camera array, or the like.

At step 2505, the script controlling to call out, sending to the signalling system an INTIVE which carries therein a SDP offer. The SDP offer carries the UI URI header.

At step 2506, the signalling system routing the received INVITE to the called UE_B.

At step 2507, the UE_B sending a Get request to the Web Server to acquire the page according to the UI URI header.

At step 2508, the Web Server carrying the page and the script (HTML+JS) corresponding to the URI in 200OK, and returning to the UE_B.

At step 2509, the script triggering the connections to the AR glasses and the multiple cameras, and the correspondence with the control stream.

At step 2510, the UE_B interacting with an external device (such as the AR glasses) to acquire the SDP.

At step 2511, the UE_B interacting with an external device (such as the 3D camera array) to acquire the SDP. It should be noted that there may be multiple external devices. If there are multiple external devices, multiple interactions with the external devices are required.

Optionally, at step 2512, the application may perform a specific interaction if needed, such as adjusting the pan&tilt angle of the camera array, or the like.

At step 2513, the UE-B returning to the signalling system a response message which carries a SDP answer. In FIG. 25, 200OK is taken as an example of the response message; in practice, according to the SIP message, the response message may be other 18x message, such as 183 or the like.

At step 2514, the signalling system forwarding 200OK to the UE_A.

At step 2515, the script controlling the UE_A to exchange the SDP with an external device such as the 3D camera array.

At step 2516, the UE_A sending an ACK to the signalling system.

At step 2517, the signalling system forwarding the ACK to the UE_B.

At this point, multiple video streams for describing images of the user A may be delivered from the 3D camera array of the UE_A to the AR glasses of the UE_B, and the holographic images of the user A are presented by the AR glasses of the UE_B according to the multiple video streams; meanwhile, multiple video streams for describing images of the user B may be delivered from the 3D camera array of the UE_B to the UE_A (such as the AR glasses), and the holographic images of the user B are presented by the UE_A according to the multiple video streams.

An embodiment of the present invention further provides a computer-readable storage medium storing computer-executable instructions for performing any of the above methods for implementing a call processing.

Obviously, it should be appreciated for those skilled in the art that the above modules or steps of the present invention may be implemented by a general-purpose computing device, and may be aggregated to a single computing device or distributed over a network consisting of multiple computing devices. Optionally, they may be implemented by program codes executable by a computing device, and thereby they may be stored in a storage device and executed by a computing device. In some cases, the steps illustrated or described may be carried out in a sequence different from the described sequence here, or may be made into individual integrated circuit modules, or some of the modules or steps may be achieved by a single integrated circuit module. Accordingly, the present invention is not limited to any specific combination of hardware and software.

The above descriptions are simply the preferred embodiments of the present invention, and are not intended to limit the scope of the present invention. Any modifications, equivalent substitutions and improvements made within the principle of the present invention are intended to be covered by the scope of the present invention.

Those of ordinary skill in the art will appreciate that all or a portion of the steps of the above method may be performed by a program to instruct related hardware (e.g., a processor), which may be stored in a computer-readable storage medium, such as a read only memory, a magnetic disk, an optical disk, or the like. Optionally, all or a portion of the steps of the above embodiments may also be implemented using one or more integrated circuits. Accordingly, each module/unit in the above embodiments may be implemented in the form of hardware, for example, its corresponding functions may be implemented by an integrated circuit; or it may be implemented in the form of a software function module, for example, its corresponding functions may be implemented by a processor executing the programs/instructions stored in a storage. The present invention is not limited to any specific form of combination of hardware and software.

While the embodiments of the present invention have been described above, the described contents are merely for the purpose of understanding the invention and are not intended to limit the invention. Any modification and variation in the forms and details of the implementations may be made by those skilled in the art without departing from the scope of the invention. The protective scope of the present invention shall be defined by the appended claims.

### Industrial Applicability

The signalling architecture and the method and apparatus for implementing a call processing in the signalling architecture according to the embodiments of the present invention includes at least: a signalling system for implementing signalling functions such as registration, routing, and calling; a Web server for providing a page for user calling-related services and a corresponding script; and a user equipment for implementing Web-based communication using the signalling system and the Web server. With the technical solutions provided by the present invention, the complete integration of the signalling system and the page technology is realized.

## Claims

1. A signalling architecture comprising a signalling system, an Internet Web server, and a user equipment, abbreviated as UE; wherein
the signalling system is configured to implement signalling functions;
the Web server is configured to provide a page for user calling-related services and a corresponding script; and
the UE is configured to implement a Web-based communication by using the signalling system and the Web server.

2. The signalling architecture of claim 1, further comprising a remote device to which the UE makes a call.

3. The signalling architecture of claim 1, further comprising an external device having a media capability configured to be paired with the UE or the remote device.

4. The signalling architecture of any one of claims 1 to 3, wherein the signalling system comprises an IP multimedia system, abbreviated as IMS;
or, the signalling system comprises a multi-device application server, abbreviated as AS, and a call session control function, abbreviated as CSCF.

5. The signalling architecture of claim 2 or 3, wherein the remote device is a user equipment or a conference server.

6. An apparatus for implementing a call processing in a signalling architecture comprising a second registration processing module and a second call processing module, wherein,
the second registration processing module is configured to perform a registration and an authentication of a user equipment, abbreviated as UE, according to a registration request from the UE; and
the second call processing module is configured to establish, according to a call request of a UE which is registered and authenticated successfully, media streams between the UE initiating the call request and a called UE.

7. The apparatus of claim 6, further comprising a second stream transfer processing module configured to:
record multi-device and media stream information of a user according to a registration and a call of a third party;
receive an instruction of partial-stream transfer from a Web server in the signalling architecture and initiate a corresponding stream transfer operation; and
return a stream transfer completing indication to the Web server in the signalling architecture after completing the stream transfer.

8. The apparatus of claim 7 or 8, wherein the second call processing module is further configured to:
receive a request for calling the UE from a third UE and forward the request to the UE,
receive an acknowledge from the UE, and
establish media streams between the third UE and the UE called by the third UE.

9. The apparatus of claim 7 or 8, wherein the second call processing module is further configured to:
end, according to a hang-up request from the UE, a session between the UE initiating the hang-up request and the called UE.

10. The apparatus of claim 7 or 8, wherein the apparatus is disposed in a signalling system of the signalling architecture.

11. An apparatus for implementing a call in a signalling architecture comprising a second page processing module, wherein,
the second page processing module is configured to provide a corresponding page and script to a user equipment, abbreviated as UE, according to an acquirement request from the UE.

12. The apparatus of claim 11, further comprising a third stream transfer processing module configured to:
send, according to a Post request carrying a partial-stream transfer from the UE, an instruction of partial-stream transfer to a signalling system in the signalling architecture; and
receive a stream transfer completing indication from the signalling system in the signalling architecture.

13. The apparatus of claim 11 or 12, the second page processing module is further configured to:
provide, in a case that a UE called by the UE is a Web-based UE, the corresponding page and script to the called UE according to an acquirement request form the called UE.

14. The apparatus of claim 11 or 12, the second page processing module is further configured to provide the corresponding page and script to the UE, after receiving a Post request from the UE.

15. The apparatus of claim 11 or 12, wherein the apparatus is disposed in a Web server of the signalling architecture.

16. An apparatus for implementing a call in a signalling architecture comprising a first registration processing module, a first page processing module, and a first call processing module, wherein,
the first registration processing module is configured to perform a registration and an authentication by a signalling system;
the first page processing module is configured to acquire, by a Web server, a page and a script which need to request; and
the first call processing module is configured to acquire, after the registration and the authentication are successful, call information by the acquired script according to an operation on the page, and control calling out by the signalling system to establish media streams with a called user equipment, abbreviated as UE.

17. The apparatus of claim 16, further comprising a first stream transfer processing module configured to:
initiate, according to a setting of partial-stream transfer from a user, a Post request to the Web server in the signalling architecture; and
perform a corresponding stream transfer operation by the signalling system in the signalling architecture to transfer a part of streams to a corresponding UE;
correspondingly,
the first call processing module is further configured to:
trigger, by the script, a pairing connection between a UE where the first call processing module is located and an external device and interact with the external device to acquire a SDP, when receiving from a user a click on a link for a video call of the external device; and
establish media streams between the external device and the called UE by the signalling system and the Web server.

18. The apparatus of claim 16, further comprising a first stream transfer processing module configured to:
trigger, by the script, connections to multiple cameras and correspondences with control streams and interact with external devices to acquire a SDP, when receiving from a user a click on a link for a holographic call; or,
trigger, by the script, connections to the external devices and correspondences with control streams and interact with the external devices to acquire the SDP, when receiving the page and the script requested from the Web server; and
multiple video streams for describing images of the UE where the first stream transfer processing module is located are delivered to an external device of a peer UE, and holographic images from the UE where the first stream transfer processing module is located are presented by the external device of the peer UE according to the multiple video streams; or,
multiple video streams for describing images of the peer UE are delivered to an external device of the UE where the first stream transfer processing module is located, and holographic images of the peer UE are presented by the UE where the first stream transfer processing module is located according to the multiple video streams.

19. The apparatus of claim 16, 17 or 18, wherein the first registration processing module registers and authenticates to the signalling system by using a signalling system identification, abbreviated as ID; and
the first page processing module logs into the web server by using the signalling system ID, and uses authentication parameters of the signalling system.

20. The apparatus of claim 16, 17 or 18, wherein the first registration processing module registers and authenticates to the signalling system by using a signalling system identification, abbreviated as ID; and
the first page processing module is further configured to set an association relationship between the signalling system ID and a Web server ID, and a script control; and the first page processing module logs into the web server by using the Web server ID.

21. The apparatus of claim 16, 17 or 18, wherein the first call processing module is further configured to:
receive information input by a user, and
send a Post request to the Web server to deliver the information input by the user to the Web server.

22. The apparatus of claim 16, 17 or 18, wherein the first call processing module is further configured to:
end a session with the called UE by the signalling system.

23. The apparatus of claim 16, 17 or 18, wherein the first call processing module is further configured to:
receive a call request from a third UE from the signalling system;
control to present two videos on the page and return an acknowledge to the signalling system; and
establish media streams with the third UE.

24. The apparatus of claim 23, wherein, in the first registration processing module, one SIP_UA of the UE where the first registration processing module is located initiates a registration request.

25. The apparatus of claim 24, wherein the one SIP_UA contains one or more pages, each page comprises one or more calls.

26. The apparatus of claim 16, 17 or 18, wherein the first page processing module is further configured to acquire, according to a HTTP URI carried in a UI URI header from the signalling system, a URI of the page which needs to be requested.

27. The apparatus of claim 26, wherein the UI URI header of the signalling system is carried in an INVITE sent by the signalling system to the UE where the signalling system is located; or carried in an INVITE sent to the signalling system from a UE initiating a call.

28. The apparatus of claim 16, 17 or 18, wherein the first page processing module is further configured to initiate, to the signalling system, a registration request carrying a capability signature indicating to support the UI URI header.

29. The apparatus of claim 16, wherein the apparatus is disposed in a user equipment of the signalling architecture.

30. A method for implementing a call processing in a signalling architecture comprising:
performing, by a signalling system in the signalling architecture, a registration and an authentication of a user equipment, abbreviated as UE, according to a registration request from the UE; and
establishing, according to a call request from a UE, media streams between the UE initiating the call request and a called UE.

31. The method of claim 30, further comprising:
recording, by the signalling system, multi-device and media stream information of a user according to a registration and a call of a third party;
receiving an instruction of partial-stream transfer from a Web server in the signalling architecture and initiating a corresponding stream transfer operation; and
returning a stream transfer completing indication to the Web server in the signalling architecture after completing the stream transfer.

32. The method of claim 30 or 31, wherein, when the signalling system receives a request for calling the UE from a third UE, the method further comprises:
forwarding, by the signalling system, the received request to the UE;
receiving an acknowledge from the UE; and
establishing media streams between the third UE and the UE called by the third UE.

33. The method of claim 30 or 31, wherein, when the signalling system receives a hang-up request from the UE, the method further comprises:
ending, according to the hang-up request from the UE, a session between the UE initiating the hang-up request and the called UE.

34. A method for implementing a call in a signalling architecture comprising: providing, by a Web server in the signalling architecture, a corresponding page and script to a user equipment, abbreviated as UE, according to an acquirement request from the UE.

35. The method of claim 34, further comprising:
sending, by the web server, an instruction of partial-stream transfer to a signalling system in the signalling architecture according to a Post request carrying a partial-stream transfer from the UE; and
receiving a stream transfer completing indication from the signalling system in the signalling architecture.

36. The method of claim 34 or 35, wherein, in a case that a UE called by the UE is a Web-based UE, the method further comprises: providing, by the Web server, the corresponding page and script to the called UE according to an acquirement request form the called UE.

37. The method of claim 34 or 35, wherein the step of providing the corresponding page and script to the UE is carried out after the Web server receives a Post request from the UE.

38. A method for implementing a call in a signalling architecture comprising:
performing, by a user equipment, abbreviated as UE, a registration and an authentication by a signalling system;
acquiring, by the UE, a page and a script which need to be requested by a Web server; and
after the registration and the authentication of the UE are successful, acquiring, by the script acquired by the UE, call information according an operation on the page, and controlling, by the signalling system, calling out to establish media streams with a called UE.

39. The method of claim 38, further comprising:
initiating, by the UE, a Post request to the Web server in the signalling architecture according to a setting of partial-stream transfer from a user;
performing, by the signalling system in the signalling architecture, a corresponding stream transfer operation to transfer a part of streams to a corresponding UE;
when the UE receives from a user a click on a link for a video call of an external device, triggering, by the script, a pairing connection between the UE and the external device, and interacting with the external device to acquire a SDP; and
establishing, by the signalling system and the web server, media streams between the external device and the called UE.

40. The method of claim 39, wherein, when the UE receives from a user a click on a link for a holographic call, the method further comprises:
triggering, by the script, connections to multiple cameras and correspondences with control streams, and interacting with an external device to acquire a SDP; or, when receiving the page and the script requested from the web server, triggering, by the script, connections to external devices and correspondences with control streams, and interacting with the external devices to acquire the SDP; and
delivering multiple video streams for describing images of the UE to an external device of a peer UE, and presenting holographic images from the UE by the external device of the peer UE according to the multiple video streams; or,
delivering multiple video streams for describing images of the peer UE to an external device of the UE, and presenting holographic images of the peer UE by the UE according to the multiple video streams.

41. The method of claim 38, 39 or 40, wherein the UE registers and authenticates to the signalling system by using a signalling system identification, abbreviated as ID; and
the UE logs into the Web server by using the signalling system ID, and uses authentication parameters of the signalling system.

42. The method of claim 38, 39 or 40, wherein the UE sets an association relationship between the signalling system ID and a Web server ID, and a script control;
the UE registers and authenticates to the signalling system by using the signalling system ID; and
the UE logs into the Web server by using the Web server ID.

43. The method of claim 38, 39 or 40, wherein, when the UE accepts information input by a user, a Post request is sent to the Web server to deliver the information input by the user to the Web server.

44. The method of claim 38, 39 or 40, wherein the UE ends a session with the called UE by the signalling system.

45. The method of claim 38, 39 or 40, when the UE receives a call request from a third UE from the signalling system, the method further comprises:
controlling, by the UE, to present two videos on the page and returning an acknowledge to the signalling system; and
establishing media streams with the third UE.

46. The method of claim 45, wherein one SIP_UA of the UE initiates a registration request.

47. The method of claim 46, wherein the one SIP_UA contains one or more pages, each page comprises one or more calls.

48. The method of claim 38, 39 or 40, wherein the UE acquires a URI of the page which needs to be requested according to a HTTP URI carried in a UI URI header from the signalling system.

49. The method of claim 48, wherein the UI URI header of the signalling system is carried in an INVITE sent by the signalling system to the UE where the signalling system is located; or carried in an INVITE sent to the signalling system from a UE initiating a call.

50. The method of claim 38, 39 or 40, wherein, when the UE initiates a registration request to the signalling system, the registration request carries a capability signature indicating to support the UI URI header.

51. A computer-readable storage medium storing computer-executable instructions for performing the method of any one of claims 30 to 33, and/or any one of claims 34 to 37, and/or any one of claims 38 to 50.
